# EUROPÄISCHE PATENTANMELDUNG

(11) **EP 2 696 082 A2**
(43) Veröffentlichungstag der Anmeldung: **12.02.2014**
(21) Anmeldenummer: 13401081.8
(22) Anmeldetag: 01.08.2013
(51) Int. Cl.: F16B 5/01

(54) **Befestigungselement und Befestigungsanordnung für Leichtbauplatten**

(30) Priorität: 09.08.2012 DE 102012107312
(71) Anmelder: fischerwerke GmbH & Co. KG, 72178 Waldachtal (DE)
(72) Erfinder: Fischer, Rainer, 72178 Waldachtal (DE); Huss, Rainer, 72285 Pfalzgrafenweiler (DE); Kempf, Christian, 72406 Bisingen (DE); Saier, Walter, 72160 Horb-Grünmettstetten (DE)

(57) **Zusammenfassung**

Die Erfindung betrifft eine Befestigungsanordnung (25) mit einem Befestigungselement (1) und einer Platte (2), insbesondere einer Leichtbauplatte, wobei das Befestigungselement (1) mit einem Klebstoffs (6) in einer Bohrung (3) verklebt wird und in das Befestigungselement (1) eine Schraube (19) geschraubt werden kann. Um eine derartige Befestigung zu verbessern, schlägt die Erfindung vor, dass am Grundkörper (7) des Befestigungselements (1) schwenkbar zwei Spreizelemente (17) angeordnet sind und dass Spreizöffnungen (15), durch die die Spreizelemente (17) nach außen schwenken, mit einer Dichtung (23) gegen Eindringen von Klebstoff (6) gesichert sind.

## Beschreibung

Die Erfindung betrifft ein Befestigungselement für Leichtbauplatten mit den Merkmalen des Oberbegriffs des Anspruchs 1 und eine Befestigungsanordnung mit den Merkmalen des Anspruchs 8.

Aus der Druckschrift DE 10 2010 016 932 A1 ist eine Befestigungsanordnung mit einem Befestigungselement in einer Leichtbauplatte bekannt. Als Leichtbauplatten werden hier insbesondere mehrlagige Platten verstanden, die eine leichte Mittelschicht und zwei demgegenüber festere und kompaktere Deckschichten aufweisen. Die Mittelschicht ist insbesondere homogen, beispielsweise ein Gemisch aus Holzspänen, geschäumtem Polystyrol und einem Bindemittel, kann aber auch inhomogen, beispielsweise mit Hohlräumen, sein. Das bekannte Befestigungselement wird in eine Bohrung in der Platte eingesetzt. Es weist ein Loch auf, in das eine Schraube selbstschneidend eingeschraubt werden kann, wobei sich das Befestigungselement verspreizen soll. Außerdem wird beim Einsetzen des Befestigungselements in die Bohrung oder beim Einbringen der Schraube ein Vorratsbehälter mit Klebstoff zerstört, wodurch sich der Klebstoff auf der Außenseite des Befestigungselements verteilt. Durch die zusätzliche Verspreizung der Wandung des Befestigungselements soll der Halt, den die Verklebung bietet, verstärkt werden. Hierin unterscheidet sich das Befestigungselement insbesondere auch gegen allgemein bekannte Gewindehülsen, insbesondere aus Messing, die in unterschiedlichste Befestigungsgründe eingeklebt werden können, um anschließend metrische Schrauben aufzunehmen. Allerdings kann es beim Erstellen der Befestigungsanordnung gemäß der Druckschrift DE 10 2010 016 932 A1 beim Eindrehen der Schraube zum Verdrehen des Befestigungselements in der Bohrung kommen, wenn der Klebstoff noch nicht ausreichend gehärtet ist, wodurch die Schraube keinen Halt findet.

Der Erfindung liegt daher die Aufgabe zu Grunde, ein Befestigungselement zu schaffen, das zuverlässig, einfach und mit hohen Haltewerten in Platten, insbesondere Leichtbauplatten, verankert werden kann, um so eine Befestigungsanordnung mit einer derartigen Platte zu ermöglichen.

Diese Aufgabe wird erfindungsgemäß durch die Merkmale des Anspruchs 1 gelöst. Das erfindungsgemäße Befestigungselement dient insbesondere der Schaffung einer Befestigungsanordnung mit den Merkmalen des Anspruchs 8. Das Befestigungselement ist insbesondere zur Verankerung in einer Leichtbauplatte geeignet, dies schließt jedoch nicht die Eignung für andere Platten oder auch Vollbaustoffe wie Holz oder Beton aus. Es weist einen Grundkörper auf, der ein Sackloch zur Aufnahme einer Schraube aufweist. Bei der Schraube kann es sich insbesondere um eine sogenannte "Euroscrew" handeln, wie sie im Möbelbau üblich ist. Als Euroscrew soll hier eine nicht-metrische Schraube mit stumpfer Spitze, im Wesentlichen zylindrischem Kern und Holzgewinde verstanden werden, wobei das Verhältnis von Gewindeaußendurchmesser zu Kerndurchmesser im zylindrischen Bereich maximal 1,6 beträgt. Der Grundkörper des Befestigungselements ist insbesondere aus Kunststoff, möglich sind aber auch andere Materialien wie beispielsweise Zinkdruckguss. Das Sackloch bildet am in Einbringrichtung hinteren Ende des Befestigungselements eine Einführöffnung für die Schraube sowie einen Innenraum zur Aufnahme der Schraube.

Das Befestigungselement ist gekennzeichnet durch mindestens ein Spreizelement, das am Grundkörper schwenkbar angeordnet ist, wobei Grundkörper und Spreizelement einstückig sein können. Das Spreizelement kann, vorzugsweise durch Einführen einer Schraube in das Sackloch, geschwenkt werden, und zwar von einer unverspreizten Stellung, in der es im Wesentlichen innerhalb des Grundkörpers angeordnet ist, zu einer verspreizten Stellung, in der es im Wesentlichen außerhalb des Grundkörpers angeordnet ist. "Im Wesentlichen" meint hier, dass das Spreizelement in das Sackloch hineinragt bzw. aus dem Grundkörper herausragt. Das Spreizelement ist in einer Spreizöffnung des Grundkörpers angeordnet und schwenkt beim Verspreizen durch diese Spreizöffnung. Das Spreizelement ist insbesondere scheibenförmig und weist eine Spitze auf, um gut insbesondere in die Mittelschicht einer Leichtbauplatte eindringen zu können und somit einen formschlüssigen Halt zu erzeugen. Scheibenförmig meint hier insbesondere, dass die radiale Erstreckung deutlich größer ist als die Erstreckung in Umfangsrichtung.

Die Erstellung der erfindungsgemäßen Befestigungsanordnung erfolgt, indem zunächst eine Bohrung in eine Platte, insbesondere eine Leichtbauplatte, eingebracht wird. Dann wird zunächst eine definierte Menge Klebstoff und anschließend das Befestigungselement in die Bohrung eingebracht. Hierdurch kommt es zu einer Benetzung des Befestigungselements mit Klebstoff und einer Verteilung des Klebstoffes zwischen Bohrungswand und Befestigungselement. Dabei besteht die Gefahr, dass Klebstoff in den Bereich des Spreizelements gelangt und dadurch die Schwenkbewegung des Spreizelements behindert wird und/oder Klebstoff in das Sackloch fließt und das Einführen einer Schraube behindert. Daher schlägt die Erfindung vor, dass die Spreizöffnung von einer Dichtung umrahmt wird. Insbesondere bleibt das Bohrloch hierdurch im Bereich der Spreizöffnung frei von Klebstoff. Damit die Dichtung ihre Wirkung entfalten kann, liegt sie vorzugsweise an der Bohrungswand an. Erfindungsgemäß ist sie dazu derart dimensioniert, dass sie in radialer Richtung bis zu einem gedachten Hüllzylinder ragt, der das Befestigungselement in der unverspreizten Stellung des Spreizelements umschreibt. Der Bohrungsdurchmesser entspricht vorzugsweise dem Durchmesser des Hüllzylinders, damit die Dichtung an der Bohrungswand anliegen kann. Dies schließt nicht aus, dass das Befestigungselement vor dem Einführen in die Bohrung einen Hüllzylinder mit etwas größerem Durchmesser aufweist um dann beim Einführen etwas radial gestaucht zu werden.

Die erfindungsgemäße Dichtung kann insbesondere eine Dichtlippe aufweisen, wobei auch die Verwendung eines anderen Materials im Vergleich zum Rest des Grundkörpers möglich ist. Die Dichtung kann aber auch flächig ausgebildet sein. Der Begriff "Dichtung" ist somit primär funktional zu verstehen: Die Dichtung verhindert das Eindringen von Klebstoff in die Spreizöffnung, wenn das Befestigungselement in die Bohrung eingebracht wird.

Ohne den Erfindungsgedanken zu verlassen, könnte die Bohrung auch konisch, insbesondere leicht konisch, ausgeführt sein. In diesem Fall ist auch der Hüllzylinder des Befestigungselements - abweichend von der streng mathematischen Definition - komplementär konisch.

Damit nicht an anderer Stelle Klebstoff in den Innenraum eindringt, sieht die Erfindung vor, dass der Grundkörper bis auf die Einführöffnung und die Spreizöffnung geschlossen ist.

Das erfindungsgemäße Befestigungselement bewirkt insbesondere durch das Spreizelement eine gute Verdrehsicherung beim Einschrauben einer Schraube, wenn der Klebstoff noch flüssig ist. Dies erleichtert die Erstellung der erfindungsgemäßen Befestigungsanordnung. Außerdem kann durch das Spreizelement eine Deckschicht einer Leichtbauplatte hintergriffen werden, was zu hohen Haltewerten führt. Die Dichtung sorgt dafür, dass das Einschrauben der Schraube und das Verspreizen des Spreizelements nicht durch den Klebstoff beeinträchtigt wird.

Um eine gute Verklebung am Umfang des Grundkörpers zu gewährleisten, weist dieser vorzugsweise an seiner Außenseite mindestens eine radiale Ausnehmung zur Aufnahme von Klebstoff auf. Mit einer "radialen Ausnehmung" ist eine Stelle gemeint, an dem die äußere Oberfläche des Grundkörpers gegenüber dem Hüllzylinder radial nach innen versetzt ist. Dies ermöglicht, dass Klebstoff in der Ausnehmung zwischen Bohrungswand und Grundkörper angeordnet sein kann und einen Verbund zwischen Grundkörper und Platte entlang der Längsausdehnung des Grundkörpers schafft.

Vorzugsweise weist der Grundkörper an seinem in Einbringrichtung hinteren Ende außen einen in Umfangsrichtung verlaufenden Kragen auf, der wie die Dichtung im Wesentlichen bis zum gedachten Hüllzylinder ragt und somit gegen ein Austreten von Klebstoff am Grundkörper vorbei aus der Bohrung abdichtet. Der Kragen wird dabei eher einen geringfügig kleineren Durchmesser als der Hüllzylinder aufweisen oder lokal unterbrochen sein, damit beim Einführen des Grundkörpers Luft aus der Bohrung entweichen kann. Für die genaue Dimensionierung des Kragens und der Dichtung kommt es außerdem auf die Fließ- und Benetzungseigenschaften des Klebers an.

In einer bevorzugten Ausführungsform ist außen am Grundkörper mindestens ein in Umfangsrichtung verlaufender Vorsprung angeordnet. Der Vorsprung bewirkt einen Formschluss zwischen dem ausgehärteten Klebstoff und dem Grundkörper entgegen einer Auszungskraft am Grundkörper und bewirkt somit eine Erhöhung der Haltewerte. Mit "Haltewert" ist hier insbesondere die entgegen der Einbringrichtung des Befestigungselements wirkende Zugkraft gemeint, bei der die Befestigungsanordnung beispielsweise durch Auszug einer Schraube oder Herauslösen des Befestigungselements aus der Platte versagt.

Der Vorsprung ragt radial bis maximal zum Hüllzylinder. Je weiter der Vorsprung bis zum Hüllzylinder ragt, desto stärker ist die radiale Überdeckung mit dem ausgehärteten Klebstoff, wodurch besonders hohe Haltewerte erreichbar sind. Allerdings kann ein derartiger Vorsprung auch als Dichtung wirken. Vorzugsweise ist der Vorsprung daher in Umfangsrichtung nicht geschlossen, um ein Fließen des Klebstoffs entlang der Außenseite des Grundkörpers nicht zu behindern.

Das Spreizelement ist vorzugsweise an seiner in Einbringrichtung des Befestigungselements hinteren Seite mit dem Grundkörper verbunden. Im Gegensatz zu einer grundsätzlich auch möglichen Anbindung weiter vorne ergibt sich durch diese Anbindung ein besonders zuverlässiges Schwenken beim Einführen einer Schraube, ohne dass die Gefahr besteht, dass das Spreizelement blockiert oder verkantet. Eine besonders einfache Herstellung ergibt sich, wenn das Spreizelement über ein Filmscharnier mit dem Grundkörper verbunden ist.

Vorzugsweise weist der Grundkörper im Bereich des Innenraums längs verlaufende Rippen auf. Insbesondere im Gegensatz zu einem rein zylindrischen Innenraum erleichtert dies das selbstschneidende Formen eines Gewindes durch eine Schraube, insbesondere einer Euroscrew, bei gleichzeitig gutem Halt der Schraube.

Die Erfindung wird nachfolgend anhand eines Ausführungsbeispiels erläutert.

Es zeigen in perspektivischen Schnittzeichnungen:
- Figur 1: ein erfindungsgemäßes Befestigungselement beim Fügen in eine Leichtbauplatte;
- Figur 2: dasselbe Befestigungselement in der Leichtbauplatte, wobei das Befestigungselement in einem Längsschnitt gezeigt ist; und
- Figur 3: dasselbe Befestigungselement in der Leichtbauplatte mit eingeschraubter Schraube.

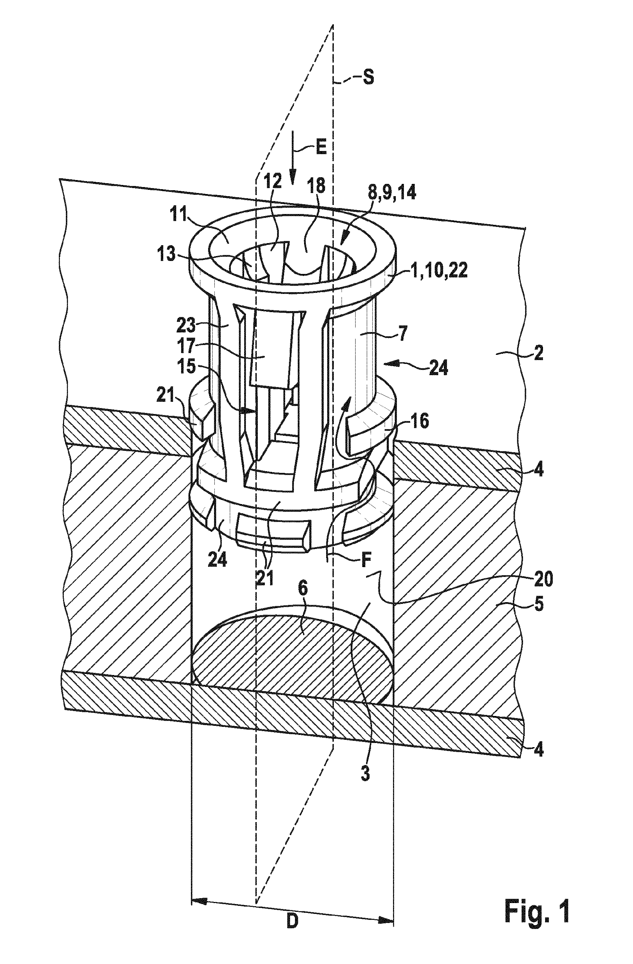

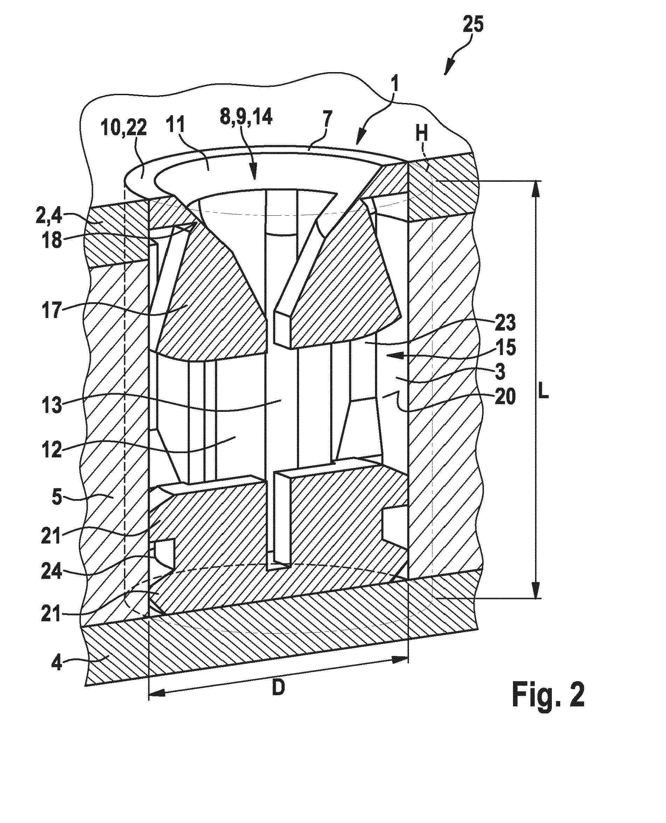

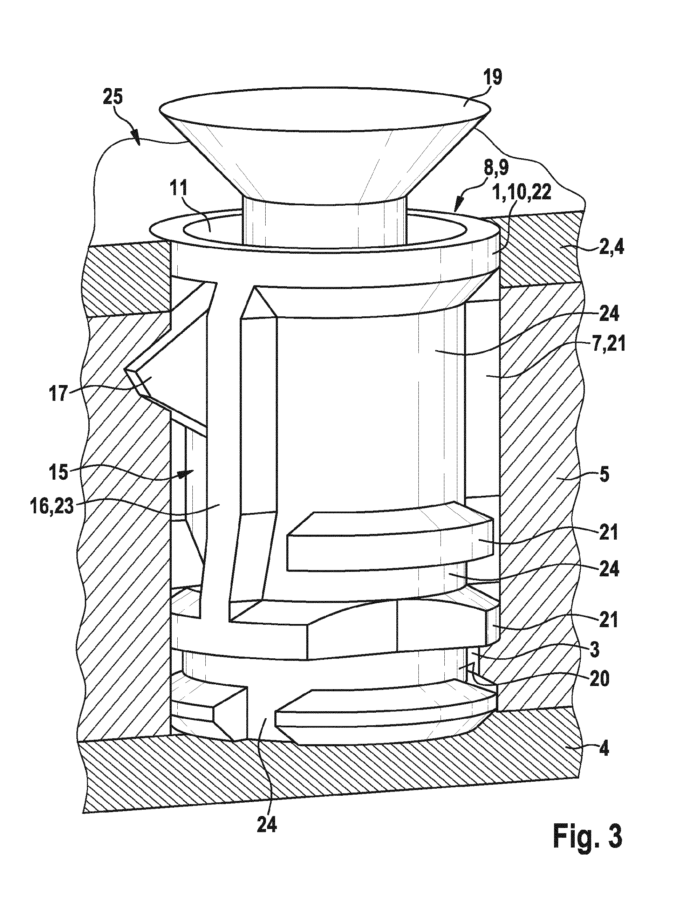

In Figur 1 ist ein erfindungsgemäßes Befestigungselement 1 beim Einstecken in eine zuvor in einer Platte 2 erstellten Bohrung 3 dargestellt. Bei der Platte 2 handelt es sich um eine Leichtbauplatte mit zwei Deckschichten 4 aus einem kompakten Gemisch aus Holzspan und Bindemittel sowie einer Mittelschicht 5 dazwischen aus einem Gemisch deutlich geringerer Dichte aus Holzspan, Polystyrol und Bindemittel. Außen auf den Deckschichten 4 kann zusätzlich eine dünne Dekorschicht angeordnet sein (nicht dargestellt). Die Bohrung 3 ist zylindrisch und reicht vollständig durch eine Deckschicht 4 und die Mittelschicht 5. Die andere Deckschicht 4 ist nicht angebohrt, wobei dies nicht zwingend ist. Bei einer dickeren Platte 2 würde die Mittelschicht 5 nicht vollständig durchbohrt sein und bei einer dünneren Platte 2 würde die Bohrung 3 bis in die zweite Deckschicht 4 ragen. Im Bereich des Grunds der Bohrung 3 ist ein noch flüssiger Klebstoff 6 als Tropfen nach dem Bohren der Bohrung 3 eingebracht worden. Bei dem Klebstoff 6 handelt es sich um einen Polyurethan-Heißkleber (reaktiver PUR Hotmelt). Der Übersicht halber ist der Klebstoff 6 in den Figuren 2 und 3 nicht dargestellt.

Das Befestigungselement 1 weist einen im Wesentlichen zylindrischen Grundkörper 7 auf, wobei der Durchmesser D eines gedachten Hüllzylinders H um den Grundkörper 7 etwa dem 0,75-fachen der Länge L des Grundkörpers 7 entspricht (siehe Figur 2). Der Grundkörper 7 weist ein Sackloch 8 auf mit einer Einführöffnung 9 am in Einbringrichtung E hinteren Ende 10 des Grundkörpers 7. Das Sackloch 8 verengt sich von der Einführöffnung 9 aus zunächst mit einer kurzen Einführfase 11 konisch und erstreckt sich dann über fast die gesamte Länge L des Grundkörpers 7 im Wesentlichen zylindrisch. An einer Innenseite 12 des Sacklochs 8 sind über den Umfang verteilt vier Rippen 13 angeordnet (siehe auch Fig. 2). Das Sackloch 8 bildet einen Innenraum 14 des Grundkörpers 7.

Der Innenraum 14 ist über zwei langgezogene, im Wesentlichen rechteckige Spreizöffnungen 15 mit einer Außenseite 16 des Grundkörpers 7 verbunden. Die beiden Spreizöffnungen 15 verlaufen in Längsrichtung des Grundkörpers 7 und liegen, bezogen auf den Umfang des Grundkörpers 7, einander gegenüber. Figur 2 zeigt dies ergänzend in einer Schnittzeichnung, wobei der Schnitt durch das Befestigungselement 1 entsprechend einer in Figur 1 gezeigten Schnittebene S angeordnet ist. In den Spreizöffnungen 15 sind jeweils im Wesentlichen dreieckige, scheibenartige Spreizelemente 17 angeordnet. Sie sind mit dem Grundkörper 7 schwenkbar an einer Ecke an der hinteren Seite über je ein Filmscharnier 18 einstückig im Bereich der Einführfase 11 verbunden und erstrecken sich in Längsrichtung des Befestigungselements 1 über etwa die Hälfte der Spreizöffnungen 15. In den Figuren 1 und 2 sind die Spreizelemente 17 jeweils in einer unverspreizten Stellung dargestellt. Sie sind in dieser Stellung im Wesentlichen innerhalb des Grundkörpers 7 angeordnet. Durch Einschrauben einer Schraube 19 (siehe Figur 3; vereinfacht dargestellt) werden sie durch die Spreizöffnungen 15 hindurch in eine verspreizte Stellung geschwenkt. Bei der Schraube 19 handelt es sich um eine Euroscrew mit einem Kerndurchmesser von 4,3 mm und einem Gewindeaußendurchmesser von 6,2 mm. In der verspreizten Stellung sind die Spreizelemente 17 im Wesentlichen außerhalb des Grundkörpers 7 angeordnet (Figur 3). Dazu dringen sie beim Verspreizen in die Mittelschicht 5 ein und hintergreifen die in den Figuren oben angeordnete Deckschicht 4. Durch die flache, dreieckige Form dringen die Spreizelemente 17 bereits beim leichten Einstecken der Schraube 19 in das Sackloch 8 in eine Bohrungswand 20 der Bohrung 3 ein und verhindern ein Verdrehen des Befestigungselements 1 in der Bohrung 3. Die Spreizelemente 17 dienen also einerseits einer Erhöhung der Haltewerte gegenüber einer reinen Klebeverbindung und andererseits als Verdrehsicherungseinrichtung.

Auf der Außenseite 16 des Grundkörpers 7 sind in der in Einbringrichtung E vorderen Hälfte auf drei Ebenen jeweils mehrere in Umfangsrichtung verlaufende, rippenartige Vorsprünge 21 angeordnet. Die Vorsprünge 21 sind aber nicht in Umfangsrichtung geschlossen, sondern erstrecken sich jeweils über etwa 60 Grad des Umfangs. Sie reichen in radialer Richtung bis jeweils an den gedachten Hüllzylinder H und liegen somit an der Bohrungswand 20 an. Beim Einführen des Befestigungselements 1 in die Bohrung 3 wird der Klebstoff 6 derart verdrängt, dass er an den Vorsprüngen 21 vorbei entlang der Außenseite 16 des Befestigungselements 1 fließt. Pfeil F in Figur 1 zeigt beispielhaft einen möglichen Fließweg. Die Verteilung des Klebstoffs 6 bewirkt, dass dieser sowohl die Außenseite 16 des Befestigungselements 1 als auch die Bohrungswand 20 über im Wesentlichen die gesamte Länge L benetzt. Am hinteren Ende 10 des Grundkörpers 7 weist dieser einen in Umfangsrichtung umlaufenden Kragen 22 auf. Auch der Kragen 22 ragt radial bis zum gedachten Hüllzylinder H und verhindert so ein Herausfließen von Klebstoff 6 aus der Bohrung 3. Die Spreizöffnungen 15 werden von jeweils einer rippenartigen Dichtung 23 umrahmt, die ebenfalls in radialer Richtung bis zum gedachten Hüllzylinder H ragt. Die Dichtungen 23 werden dabei teilweise vom Kragen 22 und je einem der Vorsprünge 21 gebildet. Die Dichtungen 23 sorgen dafür, dass kein Klebstoff 6 in den Bereich der Spreizöffnungen 15 gelangt. Da der Grundkörper 7 bis auf die Einführöffnung 9 und die Spreizöffnung 15 geschlossen ist, kann auch an anderer Stelle kein Klebstoff 6 in den Innenraum 14 des Grundkörpers 7 eindringen. Dadurch wird das Einschrauben der Schraube 19 und das Verspreizen der Spreizelemente 17 nicht durch Klebstoff 6 - ob noch flüssig oder bereits ausgehärtet - behindert. Sämtliche Bereiche am Umfang des Grundkörpers 7, die nicht Spreizöffnung 15, Vorsprung 21 oder Kragen 22 sind, bilden radiale Ausnehmungen 24, die Klebstoff 6 aufnehmen können, wobei die Klebstoffmenge idealerweise so bemessen ist, dass der durch die Ausnehmungen 24 gebildete Raum im Wesentlichen vollständig mit Klebstoff 6 gefüllt wird.

Das Befestigungselement 1 bildet zusammen mit der Platte 2 eine erfindungsgemäße Befestigungsanordnung 25.

### Befestigungselement und Befestigungsanordnung für Leichtbauplatten

- 1: Befestigungselement
- 2: Platte
- 3: Bohrung
- 4: Deckschicht
- 5: Mittelschicht
- 6: Klebstoff
- 7: Grundkörper
- 8: Sackloch
- 9: Einführöffnung
- 10: hinteres Ende des Grundkörpers 7
- 11: Einführfase
- 12: Innenseite des Sacklochs 8
- 13: Rippe
- 14: Innenraum
- 15: Spreizöffnung
- 16: Außenseite
- 17: Spreizelement
- 18: Filmscharnier
- 19: Schraube
- 20: Bohrungswand
- 21: Vorsprung
- 22: Kragen
- 23: Dichtung
- 24: Ausnehmung
- 25: Befestigungsanordnung
- D: Durchmesser des Hüllzylinders H und der Bohrung
- E: Einbringrichtung
- F: Fließweg
- H: gedachter Hüllzylinder
- L: Länge des Hüllzylinders H
- S: Schnittebene

## Patentansprüche

1. Befestigungselement (1), zur Verankerung in einer Platte (2), insbesondere einer Leichtbauplatte, mit Hilfe eines Klebstoffs (6), mit einem Grundkörper (7), der ein Sackloch (8) aufweist, das eine Einführöffnung (9) und einen Innenraum (14) zur Aufnahme einer Schraube (19) bildet, **dadurch gekennzeichnet,**
- **dass** an dem Grundkörper (7) schwenkbar mindestens ein Spreizelement (17) angeordnet ist,
- **dass** das Spreizelement (17) zwischen einer unverspreizten Stellung, in der es im Wesentlichen innerhalb des Grundkörpers (7) angeordnet ist, und einer verspreizten Stellung, in der es im Wesentlichen außerhalb des Grundkörpers (7) angeordnet ist, durch eine Spreizöffnung (15) im Grundkörper (7) hindurch schwenkbar ist,
- **dass** das Befestigungselement (1) in der unverspreizten Stellung des Spreizelements (17) von einem gedachten Hüllzylinder (H) umschrieben wird,
- **dass** die Spreizöffnung (15) von einer Dichtung (23) umrahmt wird, die in radialer Richtung bis zum gedachten Hüllzylinder (H) ragt,
- und **dass** der Grundkörper (7) bis auf die Einführöffnung (9) und die Spreizöffnung (15) geschlossen ist.

2. Befestigungselement nach Anspruch 1, **dadurch gekennzeichnet, dass** der Grundkörper (7) an seiner Außenseite (16) mindestes eine radiale Ausnehmung (24) zur Aufnahme von Klebstoff (6) aufweist.

3. Befestigungselement nach Anspruch 1 oder 2, **dadurch gekennzeichnet, dass** am in Einbringrichtung hinteren Ende (10) außen am Grundkörper (7) ein in Umfangsrichtung verlaufenden Kragen (22) angeordnet ist, der in radialer Richtung bis zum gedachten Hüllzylinder (H) ragt.

4. Befestigungselement nach einem der vorangegangenen Ansprüche, **dadurch gekennzeichnet, dass** außen am Grundkörper (7) mindestens ein in Umfangsrichtung verlaufender Vorsprung (21) angeordnet ist.

5. Befestigungselement nach Anspruch 4, **dadurch gekennzeichnet, dass** der Vorsprung (21) in radialer Richtung bis zum gedachten Hüllzylinder H ragt, und dass der Vorsprung (21) in Umfangsrichtung nicht geschlossen ist, derart, dass ein flüssiger Klebstoff (6) in Längsrichtung des Befestigungselements (1) innerhalb des Hüllzylinders (H) entlang der Außenseite (16) des Grundkörpers (7) fließen kann.

6. Befestigungselement nach einem der vorangegangenen Ansprüche, **dadurch gekennzeichnet, dass** das Spreizelement (17) an seiner in Einbringrichtung (E) des Befestigungselements (1) hinteren Seite über ein Filmscharnier (18) schwenkbar mit dem Grundkörper (7) verbunden ist.

7. Befestigungselement nach einem der vorangegangenen Ansprüche, **dadurch gekennzeichnet, dass** der Grundkörper (7) im Bereich des Innenraums (14) längs verlaufende Rippen (13) aufweist.

8. Befestigungsanordnung (25) mit einem Befestigungselement (1) nach einem der vorangegangenen Ansprüche und einer Platte (2), insbesondere einer Leichtbauplatte, die eine Bohrung (3) aufweist, in der das Befestigungselement (1) mit einem Klebstoff (6) eingeklebt ist.

9. Befestigungsanordnung nach Anspruch 8, **dadurch gekennzeichnet, dass** der Bohrungsdurchmesser im Wesentlichen dem Durchmesser (D) des Hüllzylinders (H) entspricht.

10. Befestigungsanordnung nach Anspruch 8 oder 9, **dadurch gekennzeichnet, dass** die Bohrung (3) im Bereich der Spreizöffnung (15) frei von Klebstoff (6) ist.

11. Befestigungsanordnung nach einem der Ansprüche 8 bis 10, **dadurch gekennzeichnet, dass** durch Einbringen einer Schraube (19) in den Innenraum (14) das Spreizelement (17) in Richtung der verspreizten Stellung schwenkbar ist.
